# EUROPÄISCHE PATENTSCHRIFT

(11) **EP 0 484 761 B1**
(45) Veröffentlichungstag und Bekanntmachung des Hinweises auf die Patenterteilung: **12.10.1994**
(21) Anmeldenummer: 91118205.3
(22) Anmeldetag: 25.10.1991
(51) Int. Cl.: C09J 175/06, C08G 18/42, C08G 18/46, C08G 18/71, C08G 18/10

(54) **Schmelzklebstoffe**
Hot-melt adhesives
Adhésifs thermofusibles

(30) Priorität: 07.11.1990 DE 4035280
(43) Veröffentlichungstag der Anmeldung: 13.05.1992
(73) Patentinhaber: BAYER AG, 51368 Leverkusen (DE)
(72) Erfinder: Hänsel, Eduard, Dr., W-5600 Wuppertal (DE); Meckel, Walter, Dr., W-4040 Neuss (DE); König, Klaus, Dr., W-5068 Odenthal (DE); Ganster, Otto, Dr., W-5068 Odenthal (DE); Stepanski, Horst, Dr., W-5090 Leverkusen 3 (DE)

(56) Entgegenhaltungen:
- EP-A- 0 448 825
- DE-A- 3 230 009
- FR-A- 2 303 058
- GB-A- 2 137 638

## Beschreibung

Die vorliegende Erfindung betrifft neue kristalline Isocyanatgruppen enthaltende Schmelzklebstoffe.

Fügeverfahren mit lösungsmittelfreien, 100 % Feststoff enthaltenden Klebstoffsystemen gewinnen in der heutigen Zeit immer mehr an Bedeutung, da die Verwendung von lösungsmittelhaltigen Systemen aufwendige Lösungsmittelrückgewinnungsanlagen erfordern und die Verwendung von wäßrigen Dispersions- oder Lösungssystemen eine Abdunstung des Wassers erfordert, was ebenfalls unter Umständen sehr kostenintensiv ist. Als technische, bereits weit verbreitete Alternative bieten sich Schmelzklebstoffe an. Ihre Vorteile bestehen darin, daß sie, als heiße Schmelzen aufgetragen, rasch beim Abkühlen erstarren und damit Festigkeit aufbauen. Ein Nachteil besteht darin, daß, bedingt durch die hohen Schmelztemperaturen, das Verkleben von temperaturempfindlichen Substraten erschwert ist, und da der aufgetragene Klebstoff, wenn er nicht sofort weiterverarbeitet wird, durch die rasche Verfestigung in einen nicht mehr benetzenden Zustand übergeht, der nur noch unter extremen Temperaturbedingungen thermisch aktiviert werden kann, und außerdem der Verbund, bedingt durch den thermoplastischen Charakter des Hotmelts eine begrenzte Wärmestandfestigkeit aufweist.

Eine elegante Art, die Eigenschaften von Schmelzklebstoffen, nämlich beim Abkühlen Festigkeit aufzubauen, gleichzeitig bei tiefen Temperaturen anwendbar zu sein, aber doch Klebungen guter Wärmefestigkeit zu geben, ist ein im Prinzip in der DE-PS 878 827 und DE-OS 2 609 266 beschriebenes Fügeverfahren mit reaktiven Hotmeltsystemen auf Basis von isocyanathaltigen Prepolymeren aus Diisocyanaten und Polyesterdiolen mit Schmelzbereichen oberhalb 40°C. Auf Grund der niedrigen Molekulargewichte sind die Produkte bei Temperaturen wenig oberhalb des Schmelzbereiches der Polyester flüssig und verarbeitbar und erreichen nach einer auf dem Substrat ablaufenden Kettenverlängerungsreaktion ein ausreichendes Molekulargewicht, das zusammen mit der Rekristallisation der kristallinen Weichsegmente eine erhöhte Anfangsfestigkeit ergibt und die Endfestigkeit durch vollständige Reaktion der noch vorhandenen freien Isocyanatgruppen mit beispielsweise Luftfeuchtigkeit unter Ausbildung von linearen, hochmolekularen Polyurethanpolyharnstoffen erreicht wird. Bei den heute in der Industrie üblichen, sehr raschen Taktzeiten stellt aber gerade die notwendige Vorverlängerung der isocyanathaltigen Prepolymeren einen schwer zu reproduzierenden Schritt dar, der, wenn er nicht vollständig genug abläuft, zu Fehlklebungen wegen zu niedriger Kohäsionsfestigkeit führt, und wenn er zu weit getrieben wird, die resultierende Klebstoffschicht wegen eines bereits zu hohen Molekulargewichts nicht mehr ausreichend aktivierbar ist.

Eine andere Möglichkeit der Herstellung von reaktiven Hotmelts wird in der EP-A 340 906 beschrieben. Die erwähnten Hotmelts scheinen die Anforderungen der raschen Taktzeiten zu erfüllen, jedoch ist die Herstellung der Produkte durch die Verwendung von zwei amorphen Prepolymeren unterschiedlicher Glasübergangstemperaturen aufwendig, und die Viskositäten der Produkte sind wegen der höheren Glaspunkte höher und erfordern deshalb für eine gute Benetzung der Substrate eine höhere Verarbeitungstemperatur.

In eine ähnliche Richtung, nämlich der raschen Erreichung höherer Anfangsfestigkeiten zielt die DE-OS 3 932 018 , bei der eine schnellere Kristallisation durch Mischung zweier Polyester mit unterschiedlichen Schmelzpunkten erreicht wird. Reaktive Hotmelts auf Basis höherschmelzender Polyester werden in der EP-A 354 527 beschrieben. Systeme dieser Art auf Basis von beispielsweise Dodecandisäure-Hexandiol Polyestern kristallisieren sehr rasch, bilden aber leicht im frischen Zustand sehr spröde Systeme. Dieser Nachteil wird durch die DE-OS 4 005 930 bzw. P 4 016 717.8 beschriebenen Produkte behoben. Aber auch diese sind in ihrer Kristallisationsfähigkeit bei höheren Temperaturen eingeschränkt.

Neben diesem physikalischen Verhalten des aufgetragenen Klebstoffs ist das dosierte Aufbringen der Schmelzklebstoffe ein Problem, insbesondere, wenn es sich um nichtplanare Flächen handelt, die einen Auftrag über beispielsweise Walzen oder Breitschlitzdüsen nicht gestatten. Hier werden inzwischen von der Industrie die verschiedensten Systeme angeboten. Für einen kontrollierten Auftrag des Klebstoffs auf das unter Umständen auch unregelmäßig geformte Substrat ist insbesondere der Auftrag eines Spinnvlieses geeignet. Für solche Applikationsformen werden von Klebstoff bestimmte rheologische Eigenschaften gefordert, um eine problemlose Anwendung in der Praxis zu gewährleisten. Wünschenswert ist deshalb ein technisch einfach zu realisierendes Fügeverfahren, welches auch unter ungünstigen Bedingungen eine schnelle Maschinentaktzeit erlaubt und trotzdem mit relativ niedrig schmelzenden und bei moderaten Temperaturen zu aktivierenden Klebstoffen abläuft.

Gegenstand der vorliegenden Erfindung sind somit kristalline Isocyanatgruppen enthaltende Schmelzklebstoffe auf Basis von
- 70 - 95 Gew.-%: eines Prepolymeren A auf Basis von Polyesterdiolen mit einem Molekulargewicht von 1.500 bis 10.000 und Schmelzpunkten von 50 bis 90°C und Diisocyanaten in einem Verhältnis von Isocyanatgruppen des Diisocyanats zu Hydroxylgruppen des Polyesterdiols von 3:1 bis 1,2:1, und
- 5 - 30 Gew.-%: einer Komponente B mit einem Molekulargewicht von 1.000 bis 10.000 auf Basis von Polyestern mit Schmelzpunkten von 60 bis 150°C,
dadurch gekennzeichnet, daß die Komponente B pro Molekül höchstens bis 0,5 Zerewitinow-aktive Gruppen enthält.

Eine ähnliche Vorgehensweise wird bereits in der EP-A 19 159 beschrieben, in der ein Isocyanatgruppen enthaltendes Prepolymer mit kristallinen, nichtreaktiven Carbamatestern auf Basis von Isocyanaten und Alkoholen gemischt wird. Solche Mischungen zeigen jedoch nicht den Effekt der schnelleren Kristallisation bei erhöhter Temperatur, sondern verhalten sich in dieser Hinsicht eher von Nachteil (vergl. Beispiel 9).

Am auffälligsten wird das Wesen der Erfindung dadurch dokumentiert, daß ein reaktives Hotmeltsystem auf Basis eines Dodecandisäure-Hexandiol-Polyesters und Diphenylmethandiisocyanat bei 55°C innerhalb von 10 Minuten keinerlei Neigung zur Kristallisation zeigt, während ein erfindungsgemäßes System auf der gleichen Basis mit 10 Gew.-% eines Umsetzungsproduktes des gleichen Polyesters mit zwei Mol Phenylisocyanat bereits nach zwei Minuten kristallisiert und damit Anfangsfestigkeit aufbaut (vergl. Beispiel 2 und 2a).

Klebstoffe dieser Art lassen sich überraschend ohne Schwierigkeiten in einem vliesartigen Gebilde verspritzen, leicht thermisch aktivieren, sofern zwischen Auftrag und Aktivieren kein zu großer Zeitraum - maximal 6-8 Stunden - liegt; vor allem wird durch die erfindungsgemäßen Klebstoffe eine hohe Maschinentaktzeit erreicht, da die Verbunde eine hohe Anfangsfestigkeit aufweisen.

Die Herstellung der Polyester der Komponente A erfolgt nach konventionellen Methoden durch Schmelzkondensation der Dicarbonsäuren mit einem Überschuß der Diolkomponente bei Temperaturen von 180 bis 280°C. Es können selbstverständlich auch Katalysatoren oder Schleppmittel, wie beispielsweise Toluol mitverwendet werden. Selbstverständlich kommt als Herstellmethode auch die Umesterung von Dicarbonsäureestern mit Diolen in Betracht. Die Kohlensäureester werden vorzugsweise durch Umesterung von Kohlensäureestern wie beispielsweise Diphenylcarbonat oder Kohlensäurediethylester und einem Überschuß von Diolen gewonnen.

Bevorzugte Polyesterdiole sind die, die sich von geradzahligen Dicarbonsäuren wie beispielsweise Hexan-, Octan-, Decan- oder Dodecandisäure und geradzahligen Diolen wie beispielsweise Butan-, Hexan-, Octan- oder Dodecandiol ableiten, ganz besonders bevorzugt sind die Polyesterdiole auf Basis von Hexandiol-1,6 und Adipinsäure oder Dodecandisäure. Die Molekulargewichte sollen in der Regel zwischen 1.500 und 10.000, bevorzugt zwischen 2.000 und 6.000 liegen.

Als Polyisocyanate für die Herstellung des Prepolymeren kommen alle im wesentlichen bifunktionellen, wie beispielsweise Hexamethylendiisocyanat, Isophorondiisocyanat, Toluylendiisocyanate, Diphenylmethandiisocyanate und/oder auch methylgruppensubstituierte Diphenylmethandiisocyanate, vorzugsweise aber 4,4'-Diphenylmethandiisocyanat mit bis zu 80 % 2,4'-Diphenylmethandiisocyanat in Betracht.

Das Verhältnis der Hydroxylgruppen der
Polyolkomponenten und den Isocyanatgruppen in den Diisocyanaten kann in weiten Grenzen variiert werden. Generell sollte das Verhältnis von Isocyanatgruppen und Hydroxylgruppen zwischen 3:1 und 1,2:1, vorzugsweise zwischen 2,3:1 und 1,4:1, und ganz besonders bevorzugt zwischen 2,1:1 und 1,6:1 liegen.

Es können auch polyfunktionelle aliphatische Isocyanate, die sich z.B. durch Trimerisierung oder Biuretisierung von Hexamethylendiisocyanat ableiten in Mengen von 0,1 % bis 5 % mitverwendet werden, um die Wärmestandfestigkeit der Klebung zu erhöhen. Solche Produkte können gegebenenfalls mit hydrophilen Polyethern modifiziert werden.

Als gegebenenfalls mitzuverwendende niedermolekulare Diole sind insbesondere Di-, Tri- und/oder Tetraethylenglykol, 1,4-Dimethylolcyclohexan oder Umsetzungsprodukte von 4,4'-Hydroxyphenylpropan mit Ethylen- und/oder Propylenoxid zu nennen. Für besondere Effekte können selbstverständlich auch Diole mit Ionen und/oder ionengruppenbildenden Bausteinen, wie beispielsweise Dimethylolpropionsäure, N-Methyldiethanolamin und/oder Umsetzungsprodukte von Natriumbisulfit und propoxiliertem Butendiol-1,4 anteilig mitverwendet werden.

Für die Herstellung der Komponente B kommen insbesondere die bereits oben erwähnten höherschmelzenden Polyesterdiole auf Basis von Hexan-, Octan-, Decandisäure mit beispielsweise Hexan- oder Dodecandiol, Dodecandisäure mit Butan-oder Hexandiol oder Terephthalsäure mit Hexandiol in Betracht. Das Molekulargewicht der Polyester sollte zwischen 1.000 und 10.000, bevorzugt zwischen 2.000 und 8.000 und ganz besonders bevorzugt zwischen 3.000 und 6.000 liegen.

Erfindungswesentlich ist, daß die Komponente B keine oder nur sehr geringe, das heißt 0 bis 0,5, vorzugsweise 0 bis 0,2 Zerewitinow-aktive Wasserstoffatome pro Molekül enthält, was durch die verschiedensten Maßnahmen erreicht werden kann. So kann während der Polyesterherstellung eine gewisse Menge von monofunktionellen Säuren oder Alkoholen mitverwendet werden. Am einfachsten wird es jedoch durch Reaktion der Polyesterdiole mit monofunktionellen Isocyanaten, wie beispielsweise Phenylisocyanat, Hexanisocyanat, Cyclohexylisocyanat oder Stearylisocyanat erreicht. Möglich ist auch die Verwendung eines Überschusses von Diisocyanaten, wie beispielsweise Hexamethylendiisocyanat oder Toluylendiisocyanat, gefolgt von einer Reaktion des Überschusses mit monofunktionellen Alkoholen, wie beispielsweise n-Butanol oder Octanol oder Monoaminen wie beispielsweise Dibutylamin.

Weiterhin ist der Schmelzbereich der Komponente B wesentlich, der zwischen 60 und 150°C, besonders bevorzugt 70 und 145°C, ausgedrückt durch das Endothermiemaximum in der Differentialthermoanalyse, liegen soll.

Die Herstellung der Isocyanatgruppen enthaltenden Hotmeltsysteme erfolgt beispielsweise derart, daß der flüssige Polyester mit der Komponente B gemischt und mit einem Überschuß der Polyisocyanate gemischt werden und die homogene Mischung abgefüllt wird oder bis zum Erhalt eines konstanten NCO-Wertes gerührt wird und dann abgefüllt wird. Als Reaktionstemperatur werden 60 bis 150, vorzugsweise 65 bis 110°C, gewählt. Selbstverständlich kann die Herstellung der reaktiven Hotmelts auch kontinuierlich in einer Rührkesselkaskade oder geeigneten Mischaggregaten, wie beispielsweise schnelldrehenden Mischern nach dem Rotor-Stator-Prinzip, erfolgen.

Es können aber auch erst der Polyester getrennt von der Komponente B mit dem Polyisocyanat umgesetzt werden und dann das Isocyanatgruppen enthaltende Prepolymer im erfindungsgemäßen Verhältnis mit der aufgeschmolzenen Komponente B gemischt und abgefüllt werden.

Es ist selbstverständlich möglich, die Polyester oder einen Teil derselben mit einem Unterschuß von Diisocyanaten, vorzugsweise Hexamethylendiisocyanat zu modifizieren und nach beendeter Reaktion die urethangruppenhaltigen Polyesterdiole nach Zugabe der Komponente B mit einem Überschuß von Diisocyanaten zu einem Isocyanatgruppen enthaltenden Hotmelt umzusetzen.

Der Anteil der Komponenten B soll 5 bis 30 Gew.-% der Gesamtmischung betragen, bevorzugt werden 10 bis 25 Gew.-%. Die Hotmeltsysteme sind, wenn sie unter Feuchtigkeitsausschluß bei Raumtemperatur von 25°C gelagert werden, fast unbegrenzt haltbar. Sie können mit Füllstoffen, wie beispielsweise Schwerspat oder Polymerpulvern, Farbstoffen, Harzen und/oder Streckölen modifiziert werden und stellen hervorragende Klebstoffe dar. Durch Zugabe von Carbodiimiden können die Systeme hinsichtlich ihrer Beständigkeit gegen hydrolytische Einflüsse verbessert werden.

Die Applikation erfolgt bei erhöhter Temperatur, wobei die Hotmeltsysteme kontinuierlich oder diskontinuierlich bei Temperaturen von 80 bis 160°C aufgeschmolzen werden und die Schmelze mit den zu klebenden Substraten in Kontakt gebracht wird.

Das Aufbringen auf mindestens eine der zu verklebenden Flächen kann über Walzen, Düsen und besonders bevorzugt durch Verspinnen der heißen Schmelze mit einem heißen Luftstrom erfolgen.

Bedingt durch die rasche Kristallisation der Hotmelts können die klebstofftragenden Teile für eine kurze Zeit ohne zu Verkleben gestapelt werden. Die Zeitspanne zwischen Aufbringen des Klebstoffs und dem Verkleben sollte allerdings nicht zu lange sein, da sonst Aktivierprobleme auftreten können. Die mögliche Zeitspanne liegt bei etwa 3 bis 5, maximal 8 Stunden und ist abhängig von den äußeren Bedingungen, wie Temperatur und Luftfeuchtigkeit. Eine solche Zwischenlagerung ist aber in keiner Weise notwendig und zeichnet die erfindungsgemäßen Klebstoffe gegenüber dem Stand der Technik, wie z.B. den in 2 609 266 beschriebenen, aus, bei denen die Zwischenlagerung für einen weiteren Molekulargewichtsaufbau zwingend vorgegeben ist. Bevorzugt ist somit insbesondere ein kontinuierlicher Prozeß, bei dem nach Auftrag des Hotmelts auf eine der zu verklebenden Flächen diese mit der anderen, eventuell vorgewärmten, klebstofffreien Fläche gefügt wird, und der Verbund unter Druck und eventueller Formgebung die Stufe zum fertigen Artikel durchläuft.

Die Abbindung erfolgt zunächst physikalisch durch Rekristallisation der Polyestersegmente und später durch chemische Reaktion der Isocyanatgruppen mit Feuchtigkeit oder anderen Zerewitinow-aktiven Gruppen.

Normalerweise reicht die Substrat- und Luftfeuchtigkeit zur Abbindung aus, aber die Reaktion kann selbstverständlich durch zusätzliches Benebeln mit Wasser oder Glykole und/oder Katalysatoren enthaltende Medien beschleunigt werden. Die Produkte können als Klebstoffe für die verschiedensten Materialien wie Holz, Holz enthaltende Produkte, Glas, Keramik oder Kunststoffe in massiver oder geschäumter Form wie beispielsweise PVC, ABS, Polyethylen oder Polypropylen mit sich selbst oder untereinander vielfältig eingesetzt werden. Die Klebstoffe können für die verschiedensten Einsatzgebiete verwendet werden, wie beispielsweise als Montageklebstoff zur vorläufigen Fixierung von Bauteilen, als Buchbindeklebstoff, wo durch die rasche Kristallisation ein früher Festigkeitsaufbau erreicht wird, der eine schnelle Taktzeit auf den gängigen Buchbindemaschinen erlaubt oder zur rationellen Herstellung von flächigen Verbunden, wie beispielsweise Hutablagen oder anderen Innenteilen von Kraftfahrzeugen.

Der Gegenstand der Erfindung soll anhand der folgenden Beispiele näher erläutert werden.

### Beispiele

### Polyesterpolyole A

- A-1: Hydroxylpolyester aus Adipinsäure und Hexandiol-1,6
MG 4.000
Hydroxylzahl 28
EP: 55°C
- A-2: Hydroxylpolyester aus Dodecandisäure und Hexandiol-1,6
MG 2.000
Hydroxylzahl 57
EP: 72°C
- A-3: Hydroxylpolyester aus Dodecandisäure und Hexandiol-1,6
MG 4.500
Hydroxylzahl 25
EP: 72°C
- A-4: Hydroxylpolyester aus Dodecandisäure und Dodecandiol-1,6
MG 2.000
Hydroxylzahl 54
EP: 83°C
- A-5: Hydroxylpolyester aus Dodecandisäure und Dodecandiol
MG 5.000
Hxydroxylzahl 23
EP: 86°C
- A-6: Hydroxylpolyester aus Terephthalsäure und Hexandiol-1,6
MG 1.250
Hydroxylzahl 91
EP: 142°C
- A-7: Hydroxylpolyester aus Sebazinsäure und Hexandiol
MG 2.000
Hydroxylzahl 57
EP: 65°C

### Isocyanate

- C-1: 4,4-Diisocyanatodiphenylmethan
- C-2: Hexamethylendiisocyanat
- C-3: Phenylisocyanat
- C-4: Stearylisocyanat (15,9 % NCO)
- C-5: Trimerisat von Hexamethylendiisocyanat (Desmodur® N 3300)

### Herstellung der Komponente B

Die Hydroxylpolyester werden entwässert und mit den Isocyanaten bei 100 bis 150°C umgesetzt.

| | Polyester | Isocyanat | Alkohol | Schmelzpunkt (°C) |
|---|---|---|---|---|
| B-1 | 2000g A-2 | 238g C-3 | | 73 |
| B-2 | 2000g A-2 | 564g C-4 | | 72 |
| B-3 | 2000g A-2 | 252g C-2 | 74g n-Butanol | 74 |
| B-4 | 4500g A-3 | 238g C-3 | | 76 |
| B-5 | 2000g A-4 | 238g C-3 | | 84 |
| B-6 | 5000g A-5 | 238g C-3 | | 86 |
| B-7 | 1250g A-6 | 238g C-3 | | 138 |
| B-8 | 2080g A-7 | 238g C-3 | | 67 |
| B-9 | | 250g C-1 | 260g n-Octanol | 130 |

Zerewitinow-aktive Gruppen wurden nicht nachgewiesen.

### Herstellung der Prepolymere

Die geschmolzenen Polyesterpolyole A und Komponente B werden gemischt und für 60 Minuten bei 90 bis 120°C bei ca. 20 mm Hg unter Rühren entwässert.

Bei ca. 80 bis 90°C werden die Isocyanate zugegeben und bis zur Konstanz des Isocyanatgehaltes unter Stickstoffbeschleierung gerührt.

Das Prepolymer wird in Kartuschen abgefüllt.

### Untersuchung der Hotmeltsysteme

Nach zweiwöchiger Lagerung bei Raumtemperatur werden die Kartuschen für 60 Minuten bei 130 bis 140°C im Wärmeschrank aufgeschmolzen. Von dem flüssigen Prepolymer wird der Isocyanatgehalt durch Titration mit Dibutylamin bestimmt.

Der flüssige Hotmelt wird gemäß DE 3 931 845 auf Buchenholzprobekörper aufgetragen und in einer Klimakammer bei 45 und 55°C die Aushärtecharakteristik, aufgeteilt in eine Benetzungsphase A (Sekunden) und Kristallisationsphase B (Sekunden) mit dem "CUREM" bestimmt, wobei der Gesamtbeobachtungszeitraum 10 Minuten beträgt.

| Beispiele | | | | | |
|---|---|---|---|---|---|
| | Pol-A (g) | Komponente B (g) | Diiso. C (g) | | % NCO |
| 1 | 1000 A-1 | 112 B-1 | 125 | C-1 | 1.55 |
| 2 | 1000 A-3 | 110 B-4 | 97 | C-1 | 1.05 |
| 3 | " | 110 B-5 | " | " | 1.08 |
| 4 | " | 110 B-6 | " | " | 1.10 |
| 5 | " | 110 B-3 | " | " | 1.05 |
| 6 | " | 110 B-1 | " | " | 1.12 |
| 7 | " | 110 B-2 | " | " | 1.05 |
| 8 | " | 110 B-7 | " | " | 1.03 |
| 9 | " | 110 B-8 | " | " | 1.09 |
| 10 | " | 110 B-4 | " | " | 1.60 |
| | | | + 36 | C-5 | |

| Vergleich | | | | | |
|---|---|---|---|---|---|
| | Pol-A (g) | Komponente B (g) | Diiso. C (g) | | % NCO |
| 1-a | 1000 A-1 | - | 125 | C-1 | 1.65 |
| 2-a | 1000 A-3 | - | 97 | C-1 | 1.23 |
| 9 | 1000 A-3 | 110 B-9 | 97 | C-1 | 1.08 |

| Ergebnisse | | | | |
|---|---|---|---|---|
| | 45°C-Test | | 55°C-Test | |
| | Benetzung | Kristallisation | Benetzung | Kristallisation |
| 1 | 360 | 240+ | >600 | keine |
| 2 | 55 | 35 | 120 | 480+ |
| 3 | 70 | 90 | 130 | 160 |
| 4 | 40 | 15 | 80 | 150 |
| 5 | 70 | 60 | 300 | 300+ |
| 6 | 50 | 60 | 270 | 270 |
| 7 | 70 | 50 | 360 | 240+ |
| 8 | 60 | 70 | 250 | 300 |
| 9 | 60 | 120 | 360 | 240+ |
| 10 | 60 | 40 | 130 | 450 |

| | | | | |
|---|---|---|---|---|
| + = Kristallisationsphase ist bis zum Versuchsablauf nach 10 Minuten noch nicht abgeschlossen. | | | | |

| Vergleich | | | | |
|---|---|---|---|---|
| | 45°C-Test | | 55°C-Test | |
| | Benetzung | Kristallisation | Benetzung | Kristallisation |
| 1-a | >600 | keine | >600 | keine |
| 2-a | 80 | 90 | >600 | keine |
| 9 | 50 | 70 | >600 | keine |

## Patentansprüche

1. Kristalline Isocyanatgruppen enthaltende Schmelzklebstoffe auf Basis von
70 - 95 Gew.-% eines Prepolymeren A auf Basis von Polyesterdiolen mit einem Molekulargewicht von 1.500 bis 10.000 und Schmelzpunkten von 50 bis 90°C und Diisocyanaten in einem Verhältnis von Isocyanatgruppen des Diisocyanats zu Hydroxylgruppen des Polyesterdiols von 3:1 bis 1,2:1, und
5 - 30 Gew.-% einer Komponente B mit einem Molekulargewicht von 1.000 bis 10.000 auf Basis von Polyestern mit Schmelzpunkten von 60 bis 150°C,
dadurch gekennzeichnet, daß die Komponente B pro Molekül höchstens bis zu 0,5 Zerewitinow-aktive Wasserstoffatome enthält.

2. Schmelzklebstoffe nach Anspruch 1, dadurch gekennzeichnet, daß als Diisocyanat 4,4'-Diphenylmethandiisocyanat verwendet wird.

3. Schmelzklebstoffe gemäß einem der Ansprüche 1 bis 2, dadurch gekennzeichnet, daß polyfunktionelle aliphatische Isocyanate mitverwendet werden.

4. Schmelzklebstoffe nach Anspruch 1 bis 3, dadurch gekennzeichnet, daß die Komponente B aus Polyesterdiolen und Monoisocyanaten aufgebaut ist.

5. Schmelzklebstoffe nach Anspruch 1 bis 4, dadurch gekennzeichnet, daß als Komponente B ein im wesentlichen aus Dodecandisäure und Hexandiol bestehender Polyester vom Molekulargewicht 3.000 bis 6.000 verwendet wird.

6. Schmelzklebstoffe nach Anspruch 1 bis 5, dadurch gekennzeichnet, daß das Prepolymer A im wesentlichen aus einem Polyesterdiol aus Adipinsäure und Hexandiol vom Molekulargewicht 2.000 bis 6.000 aufgebaut ist.

7. Schmelzklebstoffe nach Anspruch 1 bis 5, dadurch gekennzeichnet, daß das Prepolymer A im wesentlichen aus einem Polyesterdiol aus Dodecandisäure und Hexandiol vom Molekulargewicht 2.000 bis 6.000 aufgebaut ist.

## Claims

1. Crystalline hotmelt adhesives containing isocyanate groups based on
70 to 95% by weight of a prepolymer A based on polyester diols with a molecular weight of 1,500 to 10,000 and melting points of 50 to 90°C and diisocyanates in a ratio of isocyanate groups of the diisocyanate to hydroxyl groups of the polyester diol of 3:1 to 1.2:1 and
5 to 30% by weight of a component B with a molecular weight of 1,000 to 10,000 based on polyesters with melting points of 60 to 150°C,
characterized in that component B contains at most up to 0.5 Zerewitinoff-active hydrogen atoms per molecule.

2. Hotmelt adhesives as claimed in claim 1, characterized in that 4,4'-diphenylmethane diisocyanate is used as the diisocyanate.

3. Hotmelt adhesives as claimed in claim 1 or 2, characterized in that polyfunctional aliphatic isocyanates are used.

4. Hotmelt adhesives as claimed in claims 1 to 3, characterized in that component B is synthesized from polyester diols and monoisocyanates.

5. Hotmelt adhesives as claimed in any of claims 1 to 4, characterized in that a polyester having a molecular weight of 3,000 to 6,000 and consisting essentially of dodecanedioic acid and hexanediol is used as component B.

6. Hotmelt adhesives as claimed in any of claims 1 to 5, characterized in that the prepolymer A is synthesized essentially from a polyester diol of adipic acid and hexanediol with a molecular weight of 2,000 to 6,000.

7. Hotmelt adhesives as claimed in claims 1 to 5, characterized in that the prepolymer A is synthesized essentially from dodecanedioic acid and hexanediol with a molecular weight of 2,000 to 6,000.

## Revendications

1. Colles fusibles cristallines contenant des groupes isocyanates, à base de
70 à 95 % en poids d'un prépolymère A) à base de polyester-diols de poids moléculaire 1 500 à 10 000 ayant des points de fusion de 50 à 90°C, et de diisocyanates, à un rapport de 3 : 1 à 1,2 : 1 entre les groupes isocyanate du diisocyanate et les groupes hydroxy du polyester-diol, et
5 à 30 % en poids d'un composant B) de poids moléculaire 1000 à 10 000, à base de polyesters ayant des points de fusion de 60 à 150°C,
caractérisées en ce que le composant B) contient au maximum 0,5 atome d'hydrogène actif selon Zerewitinoff par molécule.

2. Colles fusibles selon revendication 1, caractérisées en ce que le diisocyanate utilisé est le 4,4'-diphénylméthane-diisocyanate.

3. Colles fusibles selon une des revendications 1 et 2, caractérisées en ce que l'on utilise conjointement des isocyanates aliphatiques polyfonctionnels.

4. Colles fusibles selon les revendications 1 et 3, caractérisées en ce que le composant B) est constitué de polyester-diols et de monoisocyanates.

5. Colles fusibles selon les revendications 1 à 4, caractérisées en ce que l'on utilise en tant que composant B) un polyester consistant essentiellement en l'acide dodécanedioïque et l'hexane-diol et ayant un poids moléculaire de 3 000 à 6 000.

6. Colles fusibles selon les revendications 1 à 5, caractérisées en ce que le prépolymère A) est constitué essentiellement d'un polyester-diol de l'acide adipique et de l'hexane-diol, de poids moléculaire 2 000 à 6 000.

7. Colles fusibles selon les revendications 1 à 5, caractérisées en ce que le prépolymère A) est constitué essentiellement d'un polyester-diol de l'acide dodécane-dioïque et de l'hexane-diol, de poids moléculaire 2 000 à 6 000.
